# EUROPEAN PATENT SPECIFICATION

(11) **EP 0 395 419 B1**
(45) Date of publication and mention of the grant of the patent: **11.01.1995**
(21) Application number: 90304553.2
(22) Date of filing: 26.04.1990
(51) Int. Cl.: G11B 27/028

(54) **Apparatus for editing video programme information**
Verfahren für die Montage einer Videoprogramm-Information
Appareil pour le montage d'un programme d'information vidéo

(30) Priority: 27.04.1989 JP 108775/89
(43) Date of publication of application: 31.10.1990
(73) Proprietor: SONY CORPORATION, Tokyo 141 (JP)
(72) Inventor: Kizu, Sojiro, cc/o Patnents Division, Shinagawa-ku, Tokyo (JP); Saito, Yutaka, c/o Patents Division, Shinagawa-ku, Tokyo (JP); Ninomiya, Ichiro, c/o Patnets Division, Shinagawa-ku, Tokyo (JP); Sasho, Hidehiko, c/o Patents Division, Shinagawa-ku, Tokyo (JP)
(74) Representative: Thomas, Christopher Hugo

(56) References cited:
- EP-A- 0 279 410
- PATENT ABSTRACTS OF JAPAN vol. 9, no. 255 (E-349)(1978) 12 October 1985

## Description

This invention relates to apparatus for editing video programme information.

Video editing systems are well known for merging segments of video programme information from different prerecorded source media, such as from different video tapes, onto a final record tape, sometimes referred to as the edit tape. Typically, an operator, or editor, monitors the video programme reproduced from each video tape, selects so-called cut-in and cut-out points from each tape and then re-records each segments defined by its cut-in and cut-out points onto the edit tape. Video tapes usually have recorded thereon address data in the form of time codes to identify discrete positions, or video frames recorded on the tape. In one broadcast standard, such as the SMPTE standard, such time code address data are in the form of hours, minutes, seconds and frames, all referenced to or derived from a time code generator (or other clock, such as a studio clock). Thus, segments on each video tape may be identified by the time codes associated with the beginning (or cut-in point) and ending (or cut-out point) of those segments.

Once the editor establishes the cut-in and cut-out points (also referred to herein as the edit points) on each tape, editing is effected by playing back those source tapes by respective video tape recorders (VTRs) and when the first cut-in point is reached, the segment of video programme information identified thereby is played back and recorded on the edit tape until the cut-out point of that segment is reached. Usually, the cut-in point of the next segment on another video tape is reached in synchronism with the cut-out point of the segment just played, thus initiating the recording of this next segment on the edit tape. The foregoing operation is repeated from cut-in point to cut-out point and from tape to tape such that, as a result, the selected segments of video information are recorded sequentially on the edit tape.

While the foregoing editing operation may be carried out efficiently and quickly for relatively simple video programmes, certain difficulties arise when artistic effects are desired. For example, in recording one of several scenes in sequence, a plurality of video cameras may be used to record the same scene concurrently from different angles on different video tapes. For instance, if three separate cameras (and, of course, three separate video recorders) are used to record video and audio signals picked up from a particular scene, each video tape will have video and audio information representing that scene recorded thereon. Since each camera is independently manually operated, when a director decides to terminate the recording of that scene, it is likely that each cameraman will end his recording at a different time. Hence, although a common scene is recorded from different angles, the length of the video programme recorded on each tape will differ. As a numerical example, and assuming that each video tape begins at the same reference time (such as a time code of 00:00:00), the end of that scene on the first tape may occur at time code 05:00:00, whereas that scene may continue to be recorded on the next tape until the time code 05:03:00 and the end of that scene may be recorded on the third tape at the time code 05:06:15. Then, when the next scene is recorded by these cameras, the beginning of that next scene may commence from the times at which the previous scene ended; but here too, the end points of that next recorded scene may differ from tape to tape. Furthermore, each cameraman may begin his recording from a different time point in that scene, such that some information recorded on one tape may not be recorded on another. For example, one cameraman may delay by a second or two the beginning of the recording operation, thus missing the information in the first one or two seconds of that scene.

As the foregoing operation continues, differences in the time codes at which a particular scene begins will accumulate from tape to tape. For example, after several scenes have been recorded, a particular scene may commence at time code 50:30:00 on one tape, but at 63:15:00 on another and at 46:40:00 on yet another. When segments of that scene are to be edited, the editing operation is not as simple and straightforward as mentioned above. For example, assuming that both audio and video signals are recorded on the respective tapes, if the same scene is recorded by different cameras, it is important that, when a segment from one tape is added to a segment from another, both the video and the audio signals from the two tapes be in phase (or synchronized) with each other. If such phase synchronism is not maintained, noticeable discontinuities, particularly in the audio signals, will be detected. This is not only disturbing, it is unacceptable in edited programmes of better quality. Thus, when editing video programme information that is recorded on separate tapes but represents a common scene, all tapes must be aligned at a common time in the scene before segments thereof can be merged onto the edit tape. Heretofore, such alignment has relied primarily on the skill of the editor to position the tapes at the common scene location when the editing operation is to begin.

Another difficulty in editing arises when special effects are to be imparted to the video signals reproduced from one or more of the video tapes. In a basic editing operation, the cut-in and cut-out points on a source tape as well as those on the edit tape are selected. It is expected that the cut-in points of the source and edit tapes are reached concurrently, whereupon the video programme information played back from the source tape is recorded on the edit tape. This operation assumes that there are substantially no noticeable time delays between the playing back of the video programme information from the source tape and the recording of that information on the edit tape.

However, when image processing is used to produce special effects, a time delay may be imparted to the reproduced video signals by the image processing apparatus. Consequently, since the source and edit tapes are driven in synchronism to and through their cut-in points, a blank portion will remain on the edit tape following its cut-in point until the delayed, processed video signal finally reaches the edit tape for recording. This blank interval corresponds to the time delay attributed to the image processing apparatus and, depending upon the special effects which are desired, may be variable and unpredictable.

To prevent the aforementioned undesired blank interval from being recorded during an edit operation, a highly skilled editor may delay the movement of the edit tape to compensate for the time delay added to the processed video signal. However, if segments of video programme information from different tapes are merged onto the edit tape, synchronous in-phase movement of all tapes is needed, thus preventing the editor from delaying movement of the edit tape. Consequently, the undesired blank interval cannot be avoided easily.

Yet another drawback associated with editing apparatus occurs when one or more source tapes have several scenes recorded thereon. Typically, the editor merges segments of video programme information from a particular scene, thereby carrying out a scene-by-scene editing operation. When the editor wishes to make corrections or revisions to an edited tape, for example, if an additional segment is to be merged, or if the sequence of merged segments is to be changed, or if a particular segment is to be replaced with a special effects processed signal, such corrections or revisions may affect other scenes on the edit tape which are not changed because they, nevertheless, require the laborious task of correction to be compatible with the re-edited scene.

According to the present invention there is provided an apparatus for editing video programme information from a plurality of prerecorded source media onto an edit medium, wherein each source medium includes video programme information of a common scene which may be recorded on that medium at a location relative to a beginning location thereof that differs from the recording location of that same common scene on another source medium and each source medium includes address data representing discrete positions thereon, said apparatus comprising: playback means for playing back the programme information of said common scene concurrently from the plurality of source media; and monitor means for monitoring the played back programme information;
characterized by:
indicating means for indicating when a scene location in the common scene is played back substantially simultaneously from the plurality of source media;
storage means for storing as synchronized address data the address data from each source medium representing the actual position at which said scene location is recorded on that source medium;
select means for selecting edit points on individual ones of the source media;
reference means for referencing the selected edit points to said synchronized address data; and
control means for controlling the playback means to play back selected segments of video programme information from respective source media for recording onto the edit medium in accordance with the referenced edit points.

In an embodiment of this invention, video programme information from a plurality of pre-recorded source media are edited onto an edited record medium, wherein each source medium includes video programme information of a common scene which may be recorded at a time location relative to a beginning time location of that source medium that differs from the time location relative to the beginning time location on another source medium on which the same common scene is recorded. Each source medium includes address data representing discrete positions thereon, and when the programme information of the common scene is played back concurrently from the plurality of source media, the address data associated with the respective media are also played back. The reproduced programme information is monitored, and when a scene location in the common scene is played back substantially simultaneously from the plurality of source media, the address data from each source medium representing the actual position at which the scene location is recorded on that medium are stored as synchronized address data. Edit points on individual ones of the source media are selected; and the selected edit points are referenced to the synchronized address data. Playback of selected segments of video programme information from respective source media for recording onto the edited record medium is controlled in accordance with the referenced edit points.

The address data on a predetermined source medium may be used as referenced edit address data to identify the positions reached by that source medium for each edit point, regardless of whether the edit point identified a location on that medium or any of the other media. The referenced edit address of each edit point is updated with the difference between the synchronized address data of that source medium and the synchronized address data of another source medium to produce a controlling address which identifies the edit point on that other source medium. The positioning of that other source medium to reach a selected edit point thereon is controlled by the controlling address, whereby all of the source media are advanced in phase synchronism with each other to the respective edit points.

To determine when a scene location time is played back substantially simultaneously from the plurality of source media, an operator, such as an editor, may observe when the video pictures reproduced from the individual source media represent approximately the same time location in a scene. Typically, video programme information is played back from all of the source media concurrently, and an operator, or editor, observes the video pictures thus reproduced. For an embodiment wherein the source media comprise video tapes played by VTRs, individual VTRs may be selectively advanced or delayed relative to the others such that approximately the same location in the scene is observed. The editor may then listen to the audio signals played back from the individual video tapes; and another adjusting operation is carried out until the audio signals played back from the individual video tapes are detected to be in synchronism. A synchronizing signal is then generated to identify the synchronized address data of each source medium at the time such video and audio synchronism is observed.

The video signals played back from a source medium may be image processed to produce special effects before the recording thereof on the edited record medium. The time delay attributed to such image processing is determined, and the phase relationship between that one source medium and the edited record medium is adjusted to compensate for such time delay, whereby a segment of image processed video programme information is record at a record edit point that is substantially coincident with the play edit point from which that segment is played.

A blank interval on the edited record medium which would otherwise be present because of the image processing time delay may be avoided. Each play edit point on the source medium identified individual segments to be played back. These play edit points are stored together with a clock time, the latter representing timing information generated by a reference clock at the times the edit points are reached. Similarly, the record edit points that identify the locations on the edited record medium at which the individual segments are to be recorded are stored together with clock times corresponding to each record edit point. During the actual edit operation, the source medium and the edited record medium are advanced in synchronism with clock time signals produced by a clock generator; and when a generated clock time signal is equal to a stored clock time signal, the segment on the source medium identified by the play edit point associated with this clock time is played back and record on the edited record medium at the record edit point associated with this clock time. To compensate for the aforementioned image processing time delay, the clock time associated with a play edit point is reduced by an amount substantially equal to the image processing time delay. Thus, when the generated clock time is equal to the reduced clock time, the segment from the play edit point is reproduced, image processed and recorded on the edited record medium.

Outputs from the source media as well as an output from the special effects image processor may be coupled to the edited record medium through a switching matrix. Assuming that each source medium has several scenes recorded thereon, an edit record formed of a plurality of scene tables is stored, each scene table including play edit points which identify individual segments of video programme information to be played back from the source media, source medium identifying data identifying each source medium from which an identified segment is to be played back, and switch identifying data identifying the sequence in which the switching matrix connects the respective source media to the edited record medium. Editing is achieved by retrieving a desired scene table and then controlling the source media and the edited record medium in accordance with the data contained in that scene table. Data in one scene table, such as one or more play edit points, source medium identifying data or switch identifying data, may be revised so as to change the video programme information which is edited. Advantageously, revisions in one scene table may be made without affecting the other scene tables, thus expediting editing operations.

The invention will now be further described by way of example with reference to the accompanying drawings, throughout which like references refer to like parts, and in which:
Figure 1 is a schematic representation of a scene being asynchronously recorded on several source media by individual video cameras;
Figure 2 is a schematic representation of the video programme information recorded on the source media by the cameras shown in Figure 1;
Figure 3 illustrates a table of address data representing the time locations of individual scenes recorded on the source media by the cameras of Figure 1;
Figure 4 is a block diagram of one embodiment of an editing apparatus in accordance with the present invention;
Figure 5 is a block diagram of a VTR control circuit shown in Figure 4;
Figure 6 is a schematic representation of phase-synchronized, or aligned, source media having asynchronously recorded video programme information thereon;
Figure 7A and 7B are schematic representations of an editing operation carried out on the phase-synchronized source media shown in Figure 6;
Figure 8 illustrates a scene table that is used to control an editing operation;
Figure 9 is a block diagram of a time compensator shown in Figure 4;
Figures 10 and 11 illustrate play and record time tables, respectively, which are used by the time compensator of Figure 9 to control an editing operation;
Figure 12A to 12C are schematic representations of the effects achieved by the time compensator of Figure 9; and
Figure 13 is a schematic representation of an editing control panel.

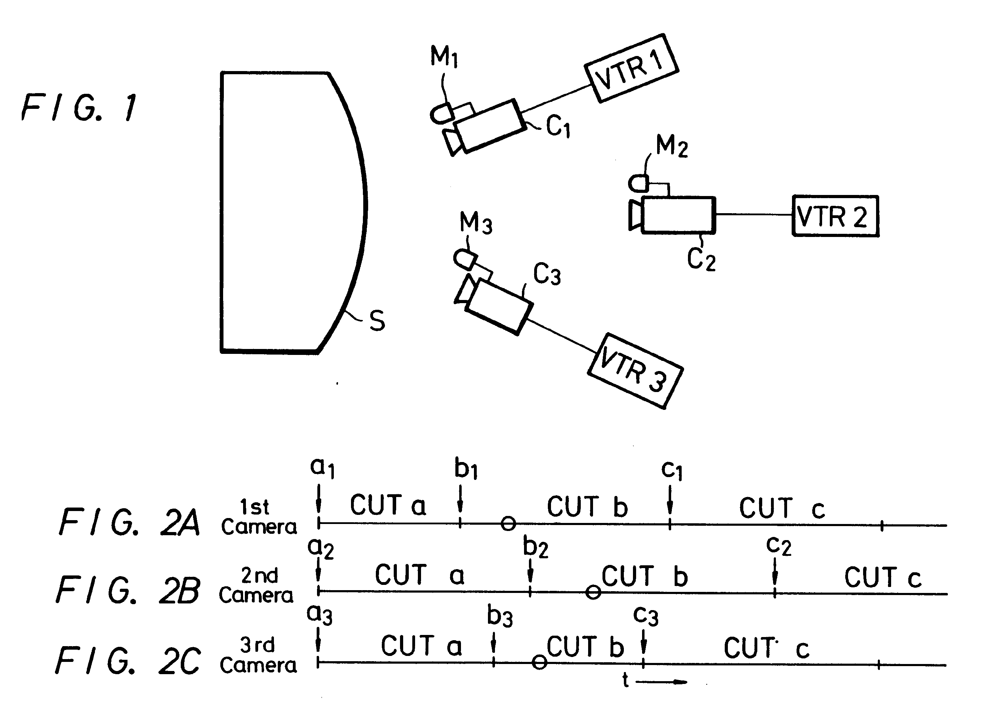

Referring now to the drawings, and in particular to Figure 1, a schematic representation is provided of three separate video cameras C2, C2 and C3 which are used to record three different angles, or views, of a common scene, such as a performance on a stage S. Each camera includes a microphone M1, M2 or M3; and each camera is illustrated as being connected to a video recorder such as a video tape recorder VTR 1, VTR 2 or VTR 3, respectively. In the illustrated embodiment, there is no interconnection between the cameras or between the VTRs. Thus, for the purpose of this description, each camera and VTR combination may be thought of as being operable independently of the others. Consequently, video information is recorded asynchronously on the respective VTRs.

When the arrangement shown in Figure 1 is used to record a musical performance, for example, having several acts or scenes, the particular scene on the stage S being recorded by the VTRs is typically referred to as a "cut". The cameras C1 to C3 are normally operated by cameramen under the control of a director. The positioning of the cameras as well as various effects, such as fade-in, fade-out etc., are controlled by the director. It is expected that, since each camera is individually controlled, the precise time at which a cameraman ends the recording of a scene may differ from camera to camera and, thus, from tape to tape. Nevertheless, successive scenes (sometimes referred to herein as "events"), or cuts, are recorded sequentially on each tape. A schematic representation of the sequence of three cuts, such as cut A, cut B and cut C, as recorded by the cameras C1, C2 and C3 on the VTR 1, the VTR 2 and the VTR 3 is illustrated in Figures 2A, 2B and 2C, respectively. It is assumed that the beginning of cut A recorded on each VTR is located at approximately the same position on each tape. However, it is seen that cut A ends on the VTR 1 before cut A ends on the VTR 3 which, in turn, ends before the end of cut A on the VTR 2. Thus, cut B begins on the VTR 1 before the beginning of cut B on the VTR 3 which, in turn, commences before the beginning of cut B on the VTR 2. More particularly, it is the time location of the beginning of cut B on the respective tapes that is out of phase.

Figure 2 further illustrates that cut B ends on the VTR 3 before the end of cut B on the VTR 1 which, in turn, ends before the end of cut B on the VTR 2. Thus, and with respect to the length of the tape in each VTR, cut C begins on the VTR 3 before the beginning of cut C on the VTR 1 which, in turn, commences before the beginning of cut C on the VTR 2.

The circles shown in Figure 2 identify a particular time location in, for example, cut B, as recorded on each of the VTRs. This particular time location is the same scene point recorded on the VTR 1, the VTR 2, and the VTR 3 by the cameras C1, C2 and C3, respectively, at the respective angles shown in, for example, Figure 1. Figures 2A to 2C illustrate the out-of-phase asynchronous nature of this common point as recorded by the three VTRs.

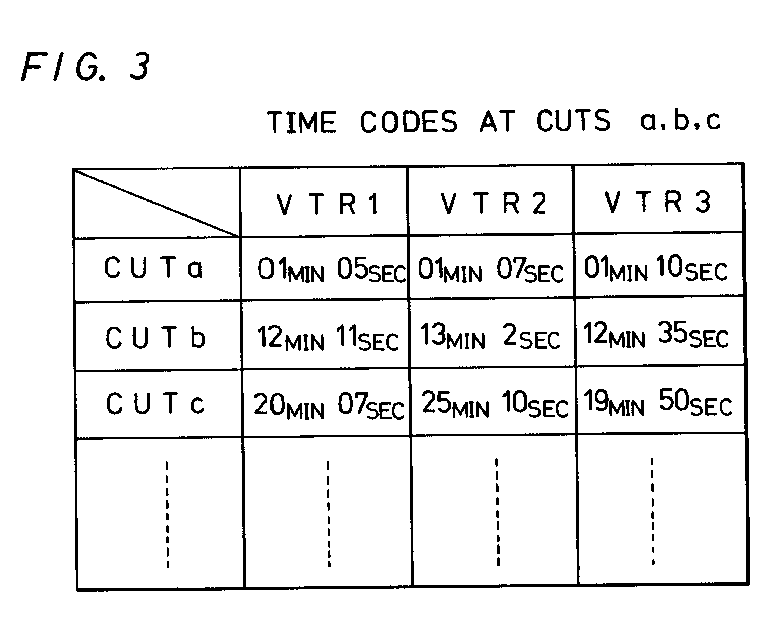

Figure 3 is a table representing the locations of the beginning of each of cuts A, B and C as recorded on the VTR 1, the VTR 2 and the VTR 3, respectively. It is usual to record address data in the form of time codes in a suitable longitudinal track on a video tape, as video information is being recorded thereon. Such time code data identify discrete positions on the tape and, as an example, the SMPTE time code convention may be used to record the time code in terms of hours, minutes, seconds and video frames. For convenience, the table shown in Figure 3 simply represents the time code in terms of minutes and seconds. The time codes depicted in the table of Figure 3 represent the respective beginnings of cuts A, B and C as recorded by the VTR 1, the VTR 2 and the VTR 3.

With the scenes asynchronously recorded on the respective video tapes in the format shown in Figures 2A to 2C and summarized by the table shown in Figure 3, it will be recognized that simple editing of different segments from the different tapes onto an edited record tape may result in the recording of discontinuous segments. For example, if different segments from cut B are to be edited onto the edited record tape, the alignment of the beginning of cut B on each recorded (or source) tape during the edit operation still may not assure that a particular point in the cut is reached simultaneously on each tape. Thus, the cuts may be thought of as being out of alignment and not synchronized, even although the beginning of each cut may be aligned from tape to tape. It will be appreciated that an aligned cut means that the beginning of a cut, or scene, is reached simultaneously on each tape by the device used to reproduce the video information thereon. Typically, such reproducing devices are VTRs and are referred to herein as play (or playback) VTRs.

If, after recording cut A, each of the VTR 1, the VTR 2 and the VTR 3 is disposed in its pause mode awaiting cut B, it is likely that each VTR will begin its recording of cut B at a slightly different time. That is, one cameraman may respond faster to a "start" direction from the director than another. Thus, even if these start points B1, B2 and B3 are aligned from tape to tape during an edit operation, the end of a particular segment on one (known as the cut-out point) may not be synchronized with the beginning of an adjacent segment on another (known as the cut-in point). Consequently, the audio and video signals recorded on the edited record medium exhibit discontinuities at the junctions of segments from the different tapes re-recorded in, for example, an assemble or insert edit operation.

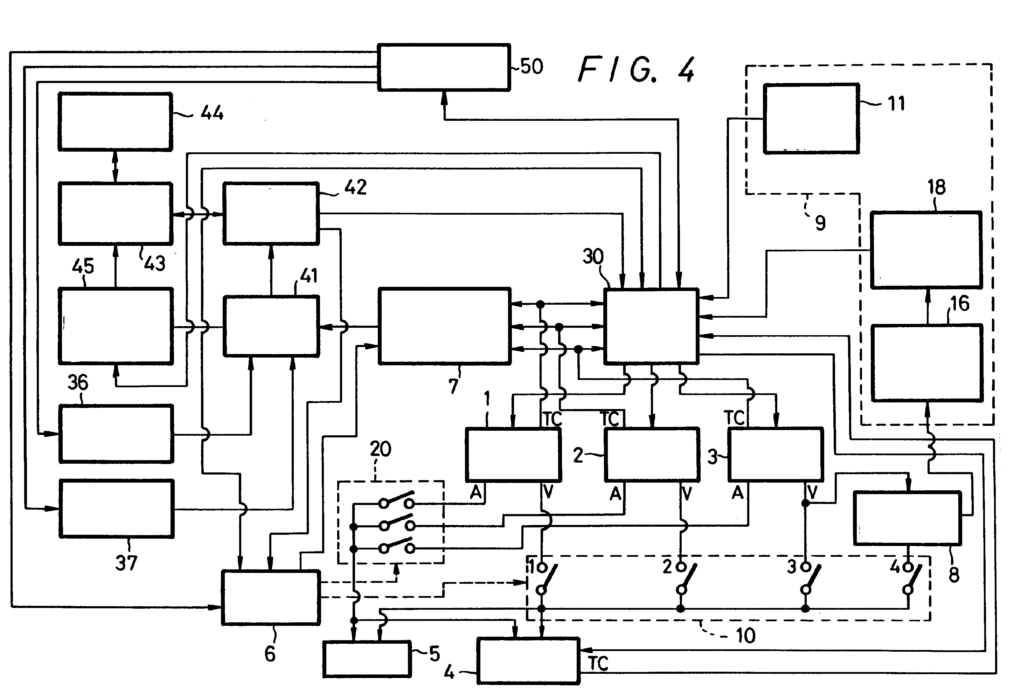

In one embodiment of the present invention, an edit operation is carried out once a particular point, referred to as the "scene location", is reached substantially simultaneously on each tape. That is, the video tapes represented in Figures 2A, 2B and 2C are reproduced by individual play VTRs; and when the desired scene location is reached substantially simultaneously while all three tapes are played concurrently, alignment is noted. Thereafter, various segments from the individual tapes may be re-recorded on the edited record tape without suffering undesired discontinuities therein. One example of an apparatus for synchronizing the edit operation is illustrated in Figure 4, wherein play VTRs 1, 2 and 3 supply segments of pre-recorded video programme information to a recording VTR 4 to produce an edited record medium. It will be appreciated that, although play VTRs are illustrated and described herein, other source media may be used to supply segments of pre-recorded video programme information, such as video discs, the latter being prepared from video information recorded by the arrangement shown in Figure 1. It will also be recognized that although three play VTRs (or three source media) are illustrated, any desired number of source media may be used to supply to the recording VTR 4 individual segments from each.

The apparatus shown in Figure 4 comprises a monitor 5, a synchronized time code detector 7, switching matrices 10 and 20, a VTR controller 30, a rewrite control circuit 41, a buffer memory 42, a data store 44 and an input device 50. The play VTRs 1, 2 and 3 are coupled to the VTR controller 30 and are controlled thereby. Similarly, the recording VTR 4 is coupled to and controlled by the VTR controller 30. Depending upon various select and control signals supplied to the VTR controller 30, as will be described below, the operation of each VTR 1, 2, 3 and 4 is controlled in a play mode, a record mode and forward and reverse tape movement. It will be appreciated that analogous operations are controller by an analogous controller in the event that the play VTRs 1, 2 and 3 are replaced by other source media.

Each VTR includes a time code output TC which produces the time code data read from each tape. It is recognized that these time code data are used to control the positioning of the tapes in the play and recording VTRs and time code data are used to address a tape to gain access to a desired time location thereon for reproducing or recording video information at that location. The time code outputs of the VTRs 1, 2, 3 and 4 are coupled to the VTR controller 30. The time code outputs of the play VTRs 1, 2 and 3 also are coupled to the synchronized time code detector 7.

Each play VTR 1, 2 and 3 includes a video output V and an audio output A to supply video and audio signals respectively reproduced from the tape therein. Similarly, the recording VTR 4 includes video and audio inputs for recording both video signals and audio signals on the tape therein. The video outputs V of the play VTRs 1, 2 and 3 are coupled to the video input of the recording VTR 4 by the video switching matrix 10. Similarly, the audio outputs of the play VTRs 1, 2 and 3 are coupled to the audio input of the recording VTR 4 by the audio switching matrix 20. The switching matrices 10 and 20 are illustrated schematically as electromechanical switches controlled by a switch control circuit 6, but are recognized as being formed as solid state switching devices. The outputs of the switching matrices 10 and 20 are also coupled to respective video and audio inputs of the monitor 5 to permit an operator, such as the editor, to view the video pictures and to listen to the audible information played back by the play VTRs 1, 2 and 3.

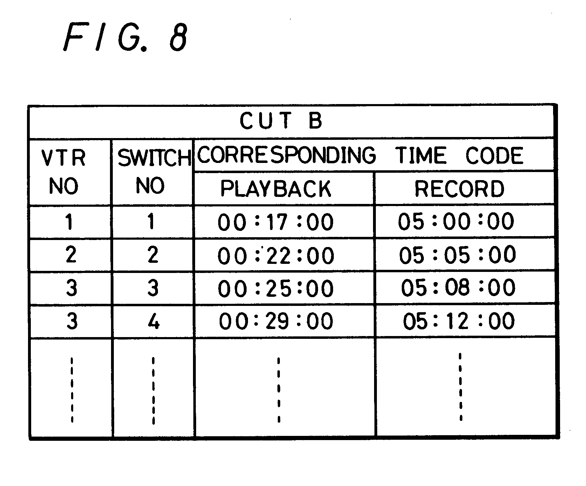

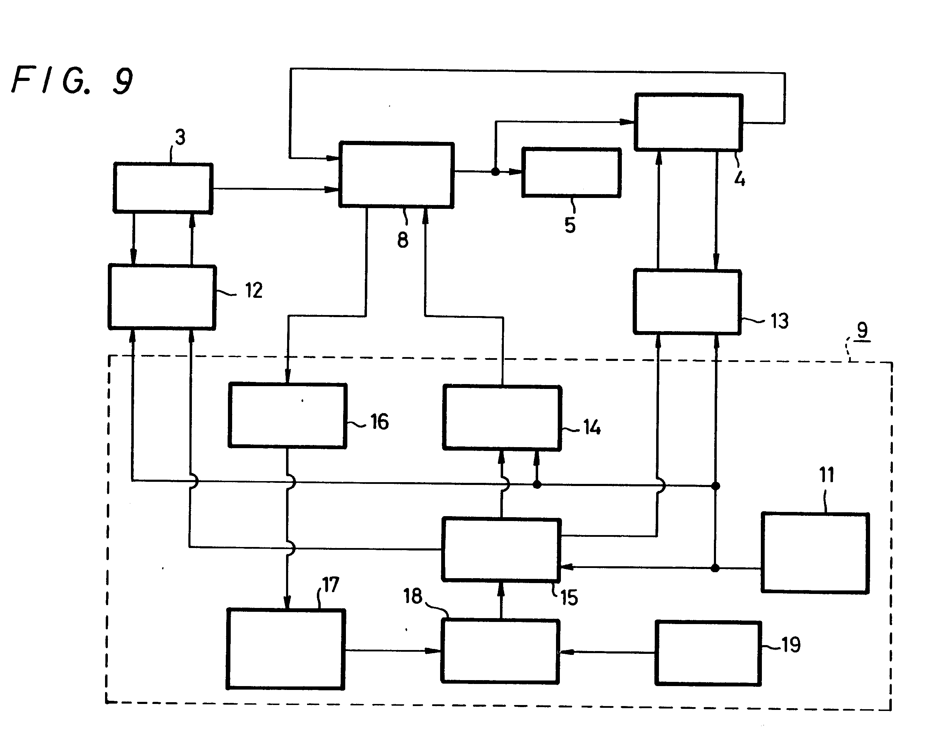

In the illustrated embodiment, a particular play VTR, such as the VTR 3, is coupled to an image processor 8 which processes the video signal supplied thereto and thereby enables special video effects to be displayed. One example of image processor 8 is disclosed in our US patent specification US-A-4 791 581. In the interest of brevity, the image processor 8 is not explained further herein but is described more particularly hereinbelow in conjunction with Figures 8 and 9. For the moment, suffice it to say that the processed video signals produced by the image processor 8 are coupled to the video switching matrix 10 to be supplied to the recording VTR 4 and the monitor 5. Another output of the image processor 8 is coupled to a time compensator 9 for a purpose described hereinbelow in conjunction with Figure 9.

The synchronized time code detector 7 is coupled to the switch control circuit 6 and responds to a signal supplied from the switch control circuit 6 to apply the respective time codes then being reproduced by the VTRs 1, 2 and 3 to the rewrite control circuit 41. The time codes supplied by the synchronized time codes for a purpose soon to be described.

The rewrite control circuit 41 is coupled to the buffer memory 42, and supplies to the buffer memory 42 the synchronized time codes received from the synchronized time code detector 7. The rewrite control circuit 41 is also coupled to a cut designator circuit 45 to receive therefrom the designation of a desired cut, or scene, such as cut A, cut B, and cut C, etc. The cut designator circuit 45 is coupled to the VTR controller 30, and receives a cut control signal as a function of, for example, the time codes received by the VTR controller 30 from the play VTRs 1, 2 and 3.

The rewrite control circuit 41 also is illustrated as being connected to receive select signals generated by a VTR selector 36 and a switch selector 37. The purpose of the selector circuits 36 and 37, and their cooperation with the rewrite control circuit 41 are described below in conjunction with Figure 8.

The buffer memory 42, in addition to being coupled to the rewrite control circuit 41, is coupled to the data store 44 via a read/write control 43. Information temporarily stored in the buffer memory 42 is written into the data store 44, which may be a RAM, by way of the read/write control 43. Similarly, information stored in the data store 44 may be read therefrom by the read/write control 43 and stored temporarily in the buffer memory 42. The buffer memory 42 stores edit records representing the edit points of respective tapes thus identifying segments which are to be played from those tapes and re-recorded on the edited record medium, the sequence in which those segments are to be played and re-recorded, and the particular cut, or scene which contains those edit points. One example of a typical scene table included in an edit record is illustrated in Figure 8 and will be described below. It is appreciated that the data identifying the edit points and the particular VTR from which those edit points are played back is supplied from the buffer memory 42 to the VTR controller 30. Data representing the sequence in which the segments are reproduced from the individual VTRs is supplied from the buffer memory 42 to the switch control circuit 6. The switch control circuit 6 also interacts with the VTR controller 30, as illustrated by the connection therebetween.

The input device 50, which is manually operated by an editor, is coupled to the VTR controller 30, the switch control circuit 6, the VTR selector 36 and the switch selector 37. The input device 50 includes switches, tape transport controls, time code displays, and the like, to be used by the editor for controlling an edit operation. One example of a suitable front panel of the input device is illustrated in Figure 13 and is described below.

An example of the operation of the apparatus illustrated in Figure 4 will now be described. Let it be assumed that video tapes having the video programme information of cuts A, B and C as illustrated in Figures 2A to 2C are loaded onto the VTRs 1, 2 and 3, respectively. As mentioned above, these video tapes are asynchronously recorded and, thus, the particular scene location in cut B on the tape played by the VTR 1 is expected to be out of alignment with that same scene location on the tapes played by the VTR 2 and by the VTR 3. Thus, if a segment from the tape played by the VTR 1 is followed by a segment played by the VTR 2, it is anticipated that a noticeable, undesired discontinuity will be present when the edited record tape is played back. Accordingly, the apparatus of Figure 4 is first operated by the editor to bring the tapes played by the VTRs 1, 2 and 3 into alignment.

The editor operates the input device 50 to supply suitable control signals to the VTR controller 30 such that the VTRs 1, 2 and 3 operate concurrently. The video switching matrix 10 is controlled by the switch control circuit 6 in response to a suitable input signal produced by the input device 50 to couple the video signal produced by a desired one of the play VTRs 1, 2 and 3 to the monitor 5. By switching from one VTR to another, the editor observes the video programme information then being reproduced by the selected VTR. Preferably, during this initial review, all of the play VTRs 1, 2 and 3 operate concurrently.

By operating appropriate ones of the switches and controls of the input device 50, the playback operation of one VTR may be advanced or delayed relative to the playback operation of the others. By selectively delaying and advancing the video tapes being played, and by observing the video pictures played back from the individual VTRs, the editor may determine when approximately the same time location in the scene represented by cut B is reached simultaneously by the VTRs 1, 2 and 3. It is expected that this empirical alignment is merely approximate and, in fact, each VTR reaches the desired scene location at slightly different times.

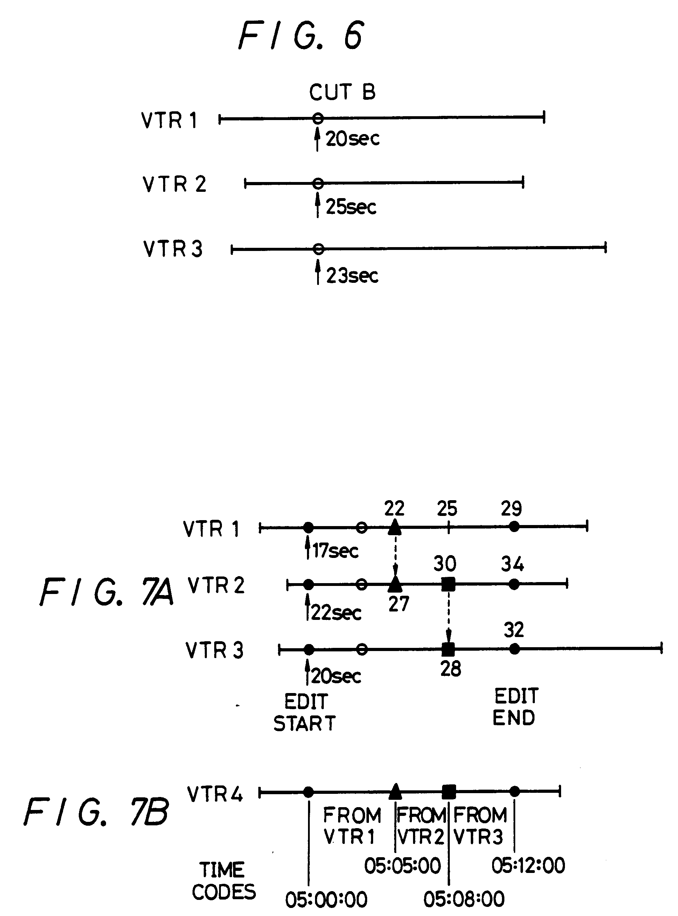

Next, the switch control circuit 6 is controlled by the input device 50 to connect the audio signals played back from a desired one of the VTRs 1, 2 and 3 to the monitor 5. By following substantially the same procedure discussed above, that is, by selectively advancing and delaying the play VTRs 1, 2 and 3 relative to each other, the editor may determine that the audible sounds reproduced from the audio signals are in phase with each other. When the audio and video signals reproduced concurrently from all of the play VTRs 1, 2 and 3 are in phase, the respective tapes are in alignment. At that time, the switch control circuit 6 responds to the operation of the input device 50 by the editor to supply a trigger signal to the synchronized time code detector 7. This trigger signal functions as an enable signal to couple the time codes then supplied to the synchronized time code detector 7 from the VTRs 1, 2 and 3 to the rewrite control circuit 41. These time codes are designated as synchronized time codes and are written into the buffer memory 42. From the buffer memory 42, these synchronized time codes are written in the data store 44 by the read/write control 43. Figure 6 illustrates schematically the synchronized time codes from the VTRs 1, 2 and 3 as detected by the synchronized time code detector 7. Thus, and as an example, when the scene location is reached simultaneously by the VTRs 1, 2 and 3, the time code read from the tape by the VTR 1 is 00:20:00, the time code read by the VTR 2 is 00:25:00 and the time code read by the VTR 3 is 00:23:00. Hence, because of the asynchronous recording of cut B, the time code read from the VTR 1 lags the time code read from the VTR 2 by five seconds and lags the time code read from the VTR 3 by three seconds. These synchronized time codes detected by the synchronized time code detector 7 are supplied to the buffer memory 42 and then written into the data store 44.

Preferably, at the time that the synchronized time code detector 7 supplies the synchronized time codes shown in Figure 6 to the rewrite control circuit 41, the cut designator circuit 45 is operated by the VTR controller 30 to supply to the rewrite control circuit a cut (or scene) designation representing that the synchronized time codes are produced during cut B. Accordingly, the data store 44 stores the synchronized time codes and the scene identification in which those synchronized time codes occur. It will be appreciated that when this synchronizing operation is repeated for other scenes, the synchronized time codes and scene identifications therefor likewise are stored in the data store 44.

When the synchronized time codes are detected and stored in the data store 44, the editor may carry out an edit operation relatively easily. As is known, in a typical edit operation, various edit points on the respective video tapes are identified as cut-in and cut-out points, and the segment of video programme information which is recorded between the cut-in and cut-out points is played back and re-recorded on the edited record tape. These edit points are identified by the time codes reproduced from the video tape. Although an edit operation can be implemented before the synchronized time codes are determined, the aforementioned difficulty of discontuities is avoided if the edit points are first reference to the synchronized time codes. These edit points may be selected by operating the input device 50 (as will be described below) while observing on the monitor 5 the desired programme information then being reproduced.

Preferably, and since the VTRs 1, 2 and 3 are operated concurrently, each edit point may be selected and identified as a discrete time code produced by, for example, the VTR 1. Of course, the particular VTR from which a segment of programme information is to be extracted and re-recorded is identified. Therefore, when the editor observes that segment reproduced from, for example, the VTR 2, its corresponding edit point may be selected by the editor and the time code then produced by the VTR 1 is supplied by the VTR controller 30 to the buffer memory 42 for storage in the data store 44. Hence, as each edit point is selected by the editor, an identification of the VTR which plays the desired segment as well as the corresponding location of that segment on the VTR 1 are supplied to and stored in the data store 44. At this time, the video signals which are reproduced by the play VTRs 1, 2 and 3 are merely displayed on the monitor 5 but are not yet recorded on the edited record tape by the recording VTR 4.

An example of the time code data and VTR identifying data stored in the data store 44 for a particular cut, or scene, is illustrated in Figure 8. It is seen that the data of Figure 8 includes the identification of a switch included in the video switching matrix 10. This switch identification may be used for the operation wherein the video output of a VTR, such as the VTR 3, is supplied directly to the switching matrix 10 or is supplied thereto via the special effects image processor 8. The switch identifying data thus may be used to select a special effect during the edit operation.

After a proposed edit operation of the aforementioned type has been completed, that is, after each edit point, VTR identifying data and switch identifying data are selected and stored as an edit record in the data store 44, and this edit record may be read out and used to control an automatic edit operation. For example, if the edit configuration established for cut B, such as shown in Figure 8, is to be implemented, the input device 50 is operated such that the VTR controller 30 supplies to the cut designator circuit 45 a request to read from the data store 44 the edit record associated with cut B. This edit record for a particular cut is referred to as a scene table; and the requested scene table is read from the data store 44 by the read/write control 43 and stored temporarily in the buffer memory 42. In addition to the scene table, the synchronized time codes for cut B also are read from the data store 44 and stored in the buffer memory 42. The play edit points are supplied from the buffer memory 42 to the VTR controller 30, and the switch identifying data are supplied to the switch control circuit 6. Although the play edit points are stored as time codes derived from the VTR 1, the VTR controller 30 converts those time codes to the time codes for the VTR 2 and the VTR 3, so as to identify the discrete positions on the tapes being played by these VTRs, and thereby reproduce a desired segment therefrom when the pre-selected edit point is reached.

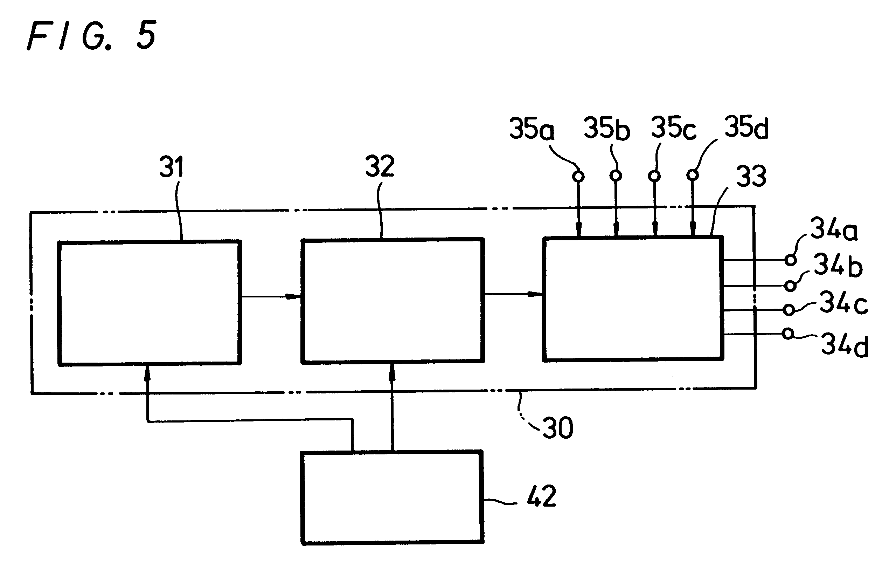

The manner in which the VTR controller 30 operates to convert the stored time codes to time codes associated with the VTRs 2 and 3 will be described below in conjunction with Figure 5. It will be explained that, since all of the play VTRs 1, 2 and 3 are operated in phase relative to the scene location that had been detected previously, the time codes identifying the respective edit points of, for example, the VTR 2 and the VTR 3 are referenced to the synchronized time codes. Hence, the time codes provided by the VTR 1 when the edit points were selected are easily converted to the time codes of the VTR 2 and the VTR 3, which time codes identify portions of the video programme information which are all in phase.

Figures 7A and 7B are schematic representations of three segments reproduced from the VTR 1, the VTR 2 and the VTR 3, and re-recorded on the recording VTR 4. It is appreciated that the synchronized time codes which are read from the data store 44 and supplied via the buffer memory 42 to the VTR controller 30 serve to drive the VTR 1, the VTR 2 and the VTR 3 in phase. That is, the tape played by each of these VTR's reaches the scene location (identified in Figure 7A as the open circle) simultaneously. It is assumed that an edit start point, or cut-in point, of the VTR 1 is selected at a time code corresponding to, for example, 00:17:00. When the cut-out point on the VTR 1 (designated by the triangle of Figure 7A) is reached, the VTR controller 30 controls the VTR 2 such that its cut-in point (also represented by the triangle in Figure 7A) is reached simultaneously. At that time, the switch control circuit 6 the controls switching matrices 10 and 20 to interrupt the connection of the VTR 1 to the recording VTR 4, and now connect the play VTR 2 to the recording VTR 4. It is appreciated that, since all of the VTRs operate in synchronism, and since the video tapes being played thereby are in alignment, the beginning of the segment extracted from the play VTR 2 is in phase with the end of the segment which had been extracted from the VTR 1.

Next, when the previously selected cut-out point on the VTR 2 is reached (represented as the square in Figure 7A), the cut-in point on the VTR 3 is reached simultaneously. The VTR controller 30 controls the operation of the VTR 3 to ensure this simultaneous arrival of its cut-in point with the arrival of the cut-out point on the VTR 2. At that time, the switch control circuit 6 controls the switching matrices 10 and 20 to change over the connection of the recording VTR 4 from the play VTR 2 to the play VTR 3. Here too, the synchronous, in-phase operation of all of the play VTRs 1, 2 and 3 assures that the beginning of the segment extracted from the VTR 3 is in phase and continuous with the end of the segment extracted from the VTR 2. The play VTR 3 continues to reproduce the video programme information previously recorded on the tape reproduced thereby until the edit end point is reached.

Figure 7B illustrates the edited record tape produced by the recording VTR 4 from the segments of video information supplied thereto from the VTR 1, from the VTR 2 and from the VTR 3.

The manner in which the VTR controller 30 operates will now be described in conjunction with the block diagram thereof shown in Figure 5. As illustrated, the VTR controller 30 includes a relative position detecting circuit 31, a relative position adder 32 and a VTR drive control circuit 33. The relative position detecting circuit 31 is coupled to the buffer memory 42, and receives the synchronized time codes which had been supplied by the synchronized time code detector 7 and stored in the data store 44 when the editor determined that the three play VTRs 1, 2 and 3 reproduced the scene location simultaneously. The detecting circuit 31 determines the difference between the synchronized time codes derived from the VTRs 1 and 2 as well as the difference between the synchronized time codes derived from the VTRs 1 and 3. In the example illustrated in Figure 6, the difference between the synchronized time codes derived from the VTRs 1 and 2 is equal to 00:05:00; and the difference between the synchronized time codes derived from the VTRs 1 and 3 is 00:03:00. These respective time code differences are supplied by the detecting circuit 31 to the relative position adding circuit 32.

The adder 32 is coupled to the buffer memory 42 and, during an edit operation receives from the buffer memory 42 the time codes representing the previously selected edit points stored in the data store 44. It is recalled that these edit points are identified as time codes derived from the VTR 1. The purpose of the adder 32 is to convert those time codes into the time codes of the VTR 2 and the VTR 3. For example, and with reference to Figure 7A, let it be assumed that the illustrated edited points had been selected. The data store 44 stores these edit points as time codes derived from the VTR 1. In the illustrated example, these edit points are stored as time codes 00:17:00, 00:22:00, 00:25:00 and 00:29:00. The adder 32 functions to add the differences detected by the detecting circuit 31 to the time codes supplied thereto from the data store 44 via the buffer memory 42. Thus, the cut-in point of the VTR 2 represented by the triangle of Figure 7A is computed by adding the time code difference of five seconds to the time code derived from the VTR 1 which represents this cut-in point. Hence, the cut-in point for the VTR 2 is calculated as 00:27:00. Similarly, the cut-out point for the VTR 2, which is represented by the square shown in Figure 7A, is calculated by adding the time code difference of five seconds to the time code derived from the VTR 1 which identifies this cut-out point. In the illustrated example, this cut-out point for the VTR 2 is represented as the time code 00:25:00 from the VTR 1 and is calculated as 00:30:00 for the VTR 2. This cut-out point for the VTR 2 occurs simultaneously with the cut-in point for the VTR 3. Since the time code difference between the VTR 1 and the VTR 3 has been detected as three seconds, this time code difference is added to the time code derived from the VTR 1 corresponding to the cut-in point on the VTR 3, resulting in a cut-in time code for the VTR 3 of 00:28:00. Finally, the cut-out point for the VTR 3, which corresponds to the edit end point, is stored in the data store 44 as 00:29:00, derived from the VTR 1. The cut-out point for the VTR 3 is thus calculated by the adder 32 as 00:32:00. Thus, the cut-in and cut-out points for the respective VTRs are derived from the edit points stored in the data store 44 and are provided by the adder 32 to the VTR drive control circuit 33 as the time codes which identify the respective cut-in and cut-out points for each VTR.

It is recognized that these individual cut-in and cut-out time codes for the respective VTRs all are referenced to the synchronized time code that had been determined by the synchronized time code detector 7 and stored in the data store 44. Consequently, the VTR drive control circuit 33 uses these time codes, which constitute the referenced edit points, to make certain that the individual video tapes are driven synchronously and in phase with each other.

The VTR drive control circuit 33 includes VTR outputs 34a to 34d coupled to the VTRs 1 to 4, respectively. The drive control circuit also includes time code inputs 35a to 35d which receive the time codes read by the VTRs 1 to 4, respectively. It is recognized that the VTR drive control circuit 33 operates to compare the time codes received at its inputs 35a to 35d with the individual time codes for the VTRs 1, 2 and 3 supplied thereto by the relative position adder 32 to detect when a time code read from a VTR is substantially equal to the edit point time code supplied from the adder 32. Upon sensing coincidence of a cut-in time code and a time code read from the VTR, the video programme information then being played by that VTR is supplied through the switching matrices 10 and 20 to the recording VTR 4. Similarly, upon sensing coincidence of a cut-out time code and a time code read from the VTR, the video programme information which had been supplied from the VTR through the switching matrices 10 and 20 to the recording VTR 4 is interrupted. It will be recognized that a cut-in time code supplied to the VTR drive control circuit 33 by the adder 32 is derived from a scene table (such as shown in Figure 8) read from the data store 44. Thus, each cut-in point (as well as each cut-out point) is accompanied by switch identifying data that is supplied from the data store 44 to the buffer memory 42 and thence to the switch control circuit 6 to close the identified switches in the switching matrices 10 and 20 at the time that the cut-in point is reached.

Therefore, it is seen that, although the data store 44 need store only the time codes derived from a single play VTR, such as the VTR 1, representing the position of the tape played by the VTR 1 at the time that each edit point is reached, whether that edit point identifies a position on the tape played by the VTR 1 or the tape played by the VTR 2 or the tape played by the VTR 3, since all three VTRs operate in phase and in synchronism with each other, the time codes derived from the VTR 1 are easily modified so as to represent the time codes for the tapes played by the VTRs 2 and 3. Consequently, the edit point for each VTR is easily calculated and used to determine when a selected segment of video programme information has been reached. Since all of the edit points are derived from the time code produced by, for example, the VTR 1, there is no discontinuity when segments from different VTRs are edited, even although the programme information provided by those VTRs had been recorded asynchronously.

Referring to Figure 8, a so-called scene table is schematically represented. This scene table is stored in the data store 44 and is identified by the particular scene represented thereby. In the illustrated embodiment, Figure 8 represents the scene table for cut B. This scene table identifies the particular play VTR which is selected to play a segment of the prerecorded video programme information from the edit point identified by the playback time code, and the scene table also identifies the sequence in which the segments are played back from the respective play VTRs 1, 2 and 3. Moreover, since special effects may be imparted to reproduced video signals by the image processor 8, the scene table also identifies the particular connection of the video switching matrix 10 by which the reproduced video signals are supplied to the recording VTR 4. For example, if special effects are to be imparted to the video information played back from VTR 3, the switch #4 matrix 10 is selected so as to coupled the video output of the VTR 3 to the recording VTR in via the image processor 8.

It will be appreciated that Figure 8 represents the edit points defined by the time codes reproduced from the VTR 1 in order to record the segments illustrated in Figure 7A onto the recording VTR 4 to form the edit tape illustrated in Figure 7B. It is recognized that the data store 44 stores several scene tables, each scene table representing the edit information for its corresponding scene. If the editor wishes to revise the edit information for any scene, such revision may be effected easily merely by reading from the data store 44 the scene table for a desired scene. For example, the scene table for cut B may be read from the data store 44, as by supplying a scene table read out signal from the input device 50 through the VTR controller 30 to the cut designator circuit 45. Once the scene table is read from the data store 44 to the buffer memory 42, the input device 50 may be operated by the editor to control the VTR selector 36 so as to change the VTR selected for playback or to change the edit point on that VTR, thereby modifying the segment of video programme information to be edited. Likewise, the switch selector 37 may be controlled by the input device 50 to revise the particular switch in one or both of the switching matrices 10 and 20, for example, to provide special video effects when desired. Of course, a modification of the scene table for one scene, such as for cut B, does not necessarily require a modification to any of the other scene tables stored in the data store 44. Thus, a complete review of all of the stored edit information is not necessary when only selected information in a particular scene table is changed.

Returning once again to Figure 4, let it be assumed that an edit operation selects a segment of video programme information reproduced from the VTR 3 to be subjected to special video effects. When the selected segment on the video tape reproduced by the VTR 3 is reached, the switch control circuit 6 actuates the switch #4 in the video switching matrix 10 such that the reproduced segment of video information is supplied to the recording VTR 4 by the image processor 8. However, as mentioned above, the video signal supplied through the image processor 8 is subjected to a time delay attributed to the signal processing carried out by the image processor 8. This delay may be a variable amount and, thus, may not be easily predicted. For example, the image processor 8 may include a so-called frame memory which imparts a delay equal to the time duration of a video frame. A time delay equal to multiple frame delays may be imparted to the video signal, depending upon the special video effects which are selected. The structure and operation of image processor 8 forms no part of the present invention per se; and further description may be found in aforementioned US-A-4 791 581.

It is recognized that, as the play VTRs 1, 2 and 3 operate, the recording VTR 4 likewise operates. Thus, video tape is advanced by each of these VTRs concurrently. From Figure 7A and 7B, it is seen that, when a segment of video information is played back from a video tape, that segment is recorded immediately on the edit tape. However, if the video signal is subjected to image processing, that processed signal is not recorded immediately upon its reproduction from the VTR. Rather, the recording is subject to a delay equal to the inherent time delay of the image processor 8. Consequently, when a segment of video information from, for example, the VTR 3 is selected and image processed, no video signals are recorded on the edit tape for a duration equal to the image processor time delay. As a result, a blank interval is recorded (or, more accurately, remains) on the edit tape. This blank interval results in an undesired, noticeable disturbance. In the apparatus shown in Figure 4, the processing control time compensator 9 is provided to take into account the time delay imparted to the video signal processed by the image processor 8 and to compensate for this time delay so as to obviate the blank interval on the edit tape.

The processing time control compensator 9 is shown in greater detail in Figure 9, and advances the time that the VTR 3 reaches its cut-in position relative to the time that the recording VTR 4 reaches its corresponding cut-in position by an amount substantially equal to the time delay imparted to the video signal reproduced by the VTR 3 and processed by image processor 8. By advancing the time that the video tape played by the VTR 3 reaches its cut-in point, the processed video signals will be supplied to the usual recording mechanism of the VTR 4 at the time that the VTR 4 reaches the cut-in point at which this processed video signal is to be recorded. The time compensator 9 includes, inter alia, a clock time generator 11, a time delay detector 16 and a subtracting circuit 18. As will be explained further below, the clock time generator 11 supplies reference clock times analogous to the time codes reproduced by the VTRs 1 to 4. Thus, the reference clock data is in the form of hours:minutes:seconds:frames. A respective clock time is associated with each edit point such that, when the clock time generator 11 generates a particular clock time, the edit point on the VTR 3 associated therewith is reached.

The time delay detector 16 is coupled to the image processor 8, and detects the inherent time delay imparted by the image processor 8 to the video signals supplied thereto from the VTR 3. It is expected that this time delay comprises one or more frame time durations. The time delay detected by the time delay detector 16 is coupled to the subtracting circuit 18 which modifies the cut-in edit point by an amount substantially equal to the detected time delay. In one case, as will be explained further below, this cut-in edit point modification is achieved by subtracting the detected time delay from the clock data associated with that edit point. It will be recognized that, when the thus-reduced clock time is reached by the clock time generator 11, the VTR controller 30 will have operated the VTR 3 to reach the cut-in edit point. Hence, the segment of video programme information reproduced from the VTR 3 will be reproduced therefrom at a time advanced from the expected time by an amount equal to the detected time delay of the image processor 8. At that time, the edit tape processed by the recording VTR 4 will not yet have reached its cut-in point. But, by the time the video signal reproduced from the VTR 3 passes through the image processor 8 to the recording VTR 4, the cut-in point on the latter will be reached and the processed video signal will be recorded thereat. Consequently, the edit tape will not be provided with an undesired blank interval preceding this cut-in point.

Figure 9 illustrates the time compensator 9 in greater detail. In addition, and for improved clarity, the VTR controller 30 is illustrated as including a play control circuit 12 coupled to the play VTR 3 and a record control circuit 13 coupled to the recording VTR 4.

The time compensator 9 includes the clock time generator 11, the time delay detector 16 and the subtracting circuit 18, as before, and it also includes an image processor control circuit 14, a time table memory 15, a delay designator 17 and a mode selector 19. The image processor control circuit 14 is coupled to the image processor 8, and controls the image processing operation in accordance with clock signals supplied by the clock time generator 11. The image processor control circuit 14 forms no part of the present invention per se and is not further described.

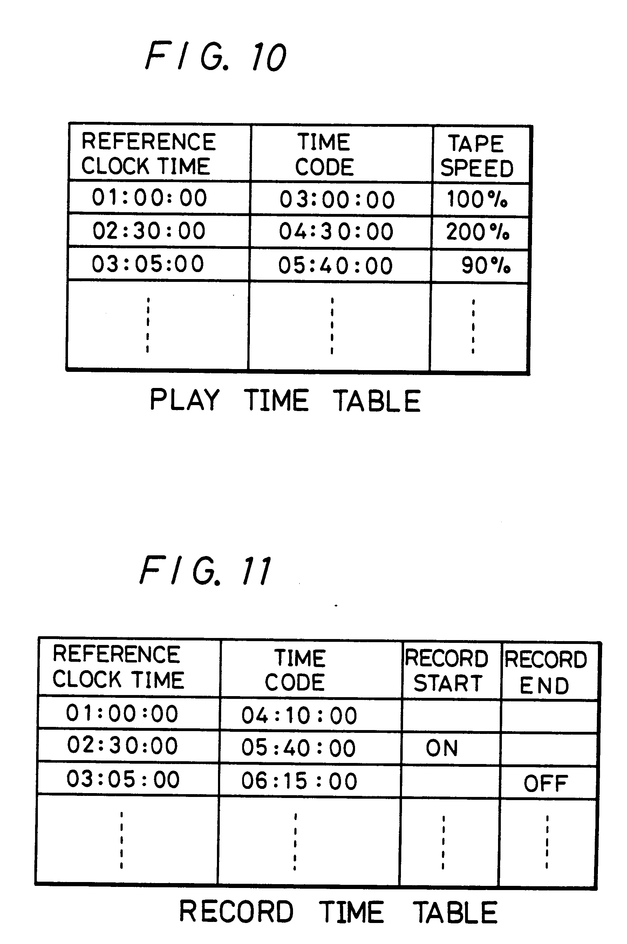

The time table memory 15 stores a play time table and a record time table of the types illustrated in Figures 10 and 11, respectively. The play time table includes time code addresses representing various edit points on the video tape played by the VTR 3. Each edit point is associated with clock data which identifies the clock time reached by the clock time generator 11 coincident with the edit point. For example, when the clock time generator 11 generates the clock time 01:00:00, the edit point identified by time code 03:00:00 is reached. The play time table illustrated in Figure 10 also contains an identification of the speed at which the tape is to be transported from this edit point to the next.

Similarly, the record time table stored in the time table memory 15, and illustrated in Figure 11, contains the time codes on the edit tape processed by the recording VTR 4 corresponding to the clock times which identify the edit points of the VTR 3. The record time table also includes an indication of the cut-in and cut-out points of the edit tape. For example, when the edit tape reaches the time code 04:10:00, no recording occurs. But, it is seen that the position of the edit tape identified by the time code 05:40:00 is a cut-in point at which the recording operation begins. The cut-out point for this recording operation, that is, the location at which the recording ends, is identified as time code 06:15:00. The cut-in and cut-out points correspond to the clock times 02:30:00 and 03:05:00, respectively.

The time table memory 15 is coupled to the play control circuit 12 and to the record control circuit 13, and supplies the play time table to the play control circuit 12 and the record time table to the record control circuit 13. The clock time generator 11 is coupled to the time table memory 15 and also to the respective play and record control circuits 12 and 13. It will be appreciated that the play and record control circuits 12 and 13 compare the clock times generated by the clock time generator 11 with the clock times stored in the play and record time tables, respectively. This comparison operation is used to control the playback and recording operations of the VTRs 3 and 4, respectively.

The delay designator 17 is coupled to the delay detector 16 and rounds off the detected time delay to the nearest frame time duration. For example, if a delay of about 1/30th second is detected, the delay designator 17 produces a time delay quantity of 00:00:01. If the time delay detector 16 detects an image processor time delay of about, for example, 3.7/30 seconds, the delay designator 17 produces a time delay quantity of 00:00:04. The delay designator 17 is coupled to the subtracting circuit 18 which, in turn, is coupled to the time table memory 15.

The purpose of the subtracting circuit 18 is to subtract the delay time quantity produced by the delay designator 17 from the clock time associated with a cut-in edit point stored in the play time table. It is recognized that this effectively advances the clock time at which that cut-in edit point is reached by an amount substantially equal to the time delay inherent in the image processor 8. The subtracting circuit 18 may be thought of as rewriting the clock times stored in the play time table of the time table memory 15.

The subtracting circuit 18 is also coupled to the mode selector 19 which establishes or cancels the subtracting operation as a function of the edit mode that may be selected by the operator. For example, the mode selector 19 cancels the subtracting operation in the event that a non-editing mode is selected by the operator. If the edit tape that had been recorded by the recording VTR 4 is played back through the image processor 8 and displayed on the monitor 5, it is desired not to modify the clock times that may be stored in the time table memory 15; and for this mode the subtracting operation is not carried out.

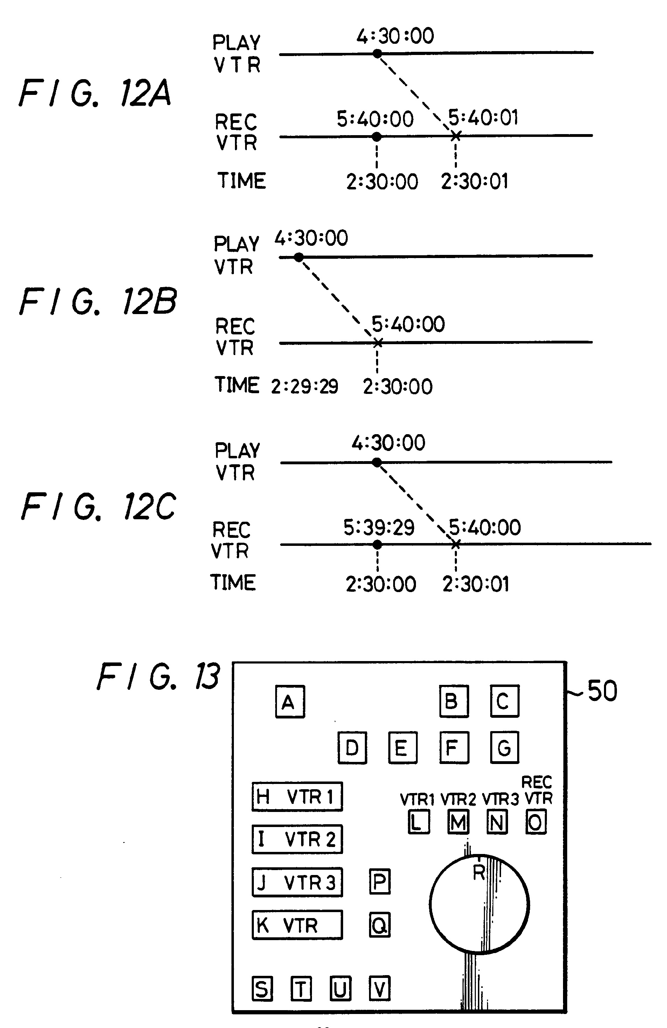

The manner in which the time compensator 9 operates now will be described with reference to the schematic representations shown in Figures 12A to 12C which illustrate the problem attending the time delay imparted by the image processor 8 and the solution to that problem. Let it be assumed that the play time table shown in Figure 10 and the record time table shown in Figure 11 are stored in the time table memory 15. It will be appreciated that the time tables may be produced when an editor operates the input device 50 (Figure 4) to select segments from the VTR 3 which are to be image processed for special effects and then recorded on the VTR 4. The clock time data illustrated in Figures 10 and 11 are generated by the clock time generator 11 during the edit set-up operation, that is, the operation used by the editor to select the desired edit points on the video tape played by the VTR 3, to select the mode at which segments of video information are played by the VTR (for example, normal, fast, slow, etc.) and to select the cut-in and cut-out points for recording those segments on the VTR 4.

In the absence of the time delay detector 16, the delay designator 17 and the subtracting circuit 18, when a segment of video information located at time code 04:30:00 on the video tape played by the VTR 3 is to be transferred to the edit tape recorded by the VTR 4 via the image processor 8, the transferred, processed segment will not reach the VTR 4 at the time that the position on the edit tape identified by the time code 05:40:00 is reached. This is because the image processor 8 imparts an inherent time delay to the video signals processed thereby. Let it be assumed that this time delay is equal to one frame time, or 1/30 second, expressed as 00:00:01. Figure 12A illustrates the recording of the image processed segment by the recording VTR 4. By reason of the time delay attributed to the image processor 8, the segment played back from location 04:30:00 on the source tape is recorded at location 05:40:01 the edit tape. Consequently, the interval from time code 05:40:00 to 05:40:01 on the edit tape remains blank.

From Figure 12A it is seen that, since the source tape and the edit tape advance in synchronism, when the clock time generator 11 generates the clock time 02:30:00 to identify the edit points on both the source and edit tapes, the source tape is positioned at the location represented by time code 04:30:00 and the edit tape is positioned at the location represented by the time code 05:40:00. In the absence of the image processor 8, a segment of video information reproduced from position 04:30:00 will be recorded on the edit tape at position 05:40:00. But, because of the image processing delay, the processed segment of video information is not recorded until the edit tape reaches position 05:40:01.

The subtracting circuit 18 compensates for this time delay. Let it be assumed that the delay detector 16 detects an image processing time delay equal to approximately the time duration of the frame. The delay designator 17 rounds off this detected delay time to 00:00:01 and supplies this designated time delay to the subtracting circuit 18. At this time, the mode selected by the mode selector 19 enables the subtracting circuit 18 to carry out a subtracting operation. Accordingly, the clock time 02:30:00 stored in the play time table in the time table memory 15 is rewritten by subtracting from this stored clock time the designated time delay. Therefore, the clock time stored in the play time table and corresponding to the source tape time code position of 04:30:00 is revised to be equal to 02:29:29. This rewritten play time table is supplied to the play control circuit 12.

Now, when an edit operation is carried out, the play control circuit 12 compares the clock times generated by the clock time generator 11 to the revised clock times stored in the play time table. When the generated clock time is equal to the revised, stored clock time of 02:29:29, the position of the source tape corresponding to this clock time is reached and the segment of video information recorded thereon is played back. Thus, the video information recorded at the edit point 04:30:00 is reproduced, supplied to the image processor 8 and re-recorded on the edit tape by the VTR 4. By the time the processed video signals reach the recording VTR, the clock time generator 11 generates the clock time of 02:30:00, whereat the cut-in point of 05:40:00 is reached on the edit tape. Hence, the image processed segment of video information is recorded at this cut-in point on the edit tape, as shown in Figure 12B. This, of course, is the location at which the segment is intended to be recorded and, therefore, the blank interval noted in Figure 12A is obviated.

Although not shown, it is recognized that the segment of video information reproduced from the VTR 3 continues until a cut-out edit point is reached. From Figure 10, it is seen that this cut-out point is reached at clock time 03:05:00 which corresponds to the time code position 05:40:00. Furthermore, the source tape is advanced at a speed determined by the tape speed data stored in the play time table. In the example described herein, this segment of video information is reproduced at twice the normal tape speed. The recording of this image processed segment on the edit tape commences at the position identified by time code 05:40:00 (that is, the cut-in point on the edit tape) and continues until the cut-out point is reached. In this example, the segment is recorded for a duration of 35 seconds and, thus, the cut-out point on the edit tape is identified as 06:15:00, as shown in the record time table of Figure 11. A comparison of Figures 10 and 11 indicates that twice the length of source tape is used to reproduce the segment that is recorded on the edit tape because the source tape is driven at twice the normal speed.

It is appreciated that, if each segment to be reproduced from the VTR 3 is to be subjected to image processing, then the clock times stored in the play time table for all of the edit points are reduced by the designated time delay derived from the time delay detector 16. When video segments are transferred from the source tape to the edit tape, each clock time signal generated by the clock time generator 11 is compared to each clock time stored in the play time table and to each clock time stored in the record time table. The source and edit tapes are controlled by the play control circuit 12 and the record control circuit 13 such that when the generated clock time coincides with a stored clock time (particularly a rewritten clock time stored in the play time table), the source and edit tapes are positioned at the time codes corresponding to that stored clock time. Then, depending upon the edit data stored in the respective time table, the commanded edit operation is effected. For example, in the play time table, the edit command may determine the speed at which the source tape is transported for playing back the video information thereon. In the record time table, the edit command identifies the cut-in and cut-out points on the edit tape, that is, the points at which the re-recording starts and ends.

Although the foregoing has described a time delay compensating operation wherein the clock times stored in the play time table are reduced as a function of the detected image processing time delay so as to advance the time at which an edit point on the source tape is reached, time compensation may be effected by increasing the clock times stored in the record time table by the detected time delay so as to delay the arrival of an edit point on the edit tape. For example, assuming the segment of video information reproduced from the source tape at the clock time 02:30:00 is to be image processed and recorded at cut-in point 05:40:00 on the edit tape, the clock time corresponding to this time code may be rewritten in the record time table as 02:30:01. Thus, and as shown in Figure 12C, when the clock time generator 11 generates the clock time 02:30:00, the edit point identified by time code 04:30:00 on the source tape is reached and the video information thereat is reproduced. At this time, however, the edit tape is positioned at the time code identified by 05:39:29. Then, when the clock time generator 11 generates the clock time of 02:30:01, the cut-in point identified by the time code 05:40:00 on the edit tape is reached and the image processed video signal then is recorded thereat. Hence, the time delay imparted by the image processor 8 is compensated and the undesired blank interval between the cut-out point of the previous segment transferred to the edit tape and the cut-in point of the next-following segment is eliminated.

Referring now to Figure 13, there is illustrated a schematic representation of an editing control panel included in the input device 50 and operable by an editor. For convenience, simplification and brevity, the manner in which this control panel is operated and the effects achieved thereby now will be discussed briefly.

To select the VTR 1 for a reproducing operation, the editor operates a VTR selector button L. Then, to search the video tape played by the VTR 1 for a desired segment, a jog mode setting button P is operated and the speed at which the tape is transported may be adjusted by operating a jog dial R. For example, and with reference to the embodiment shown in Figure 4 wherein the VTRs 1, 2 and 3 have recorded thereon the same scene picked up by different cameras, a particular scene on the VTR 1 is searched by operating the jog dial R. When the desired scene is reached, a VTR selector button M is operated to search the video tape played by the VTR 2 for the same scene. Likewise, this scene recorded on the video tape played by the VTR 3 is searched by operating a VTR selector button N. By switching from one VTR to another, the editor may observe the same scene recorded on each video tape.

To transport the three video tapes in synchronism such that they reach a scene location simultaneously, the editor operates individual ones of the VTR selector buttons L, M and N while operating the jog dial R and observing the video information displayed on the monitor 5. To advance or delay the movement of one source tape relative to the others, an advance button B or a delay button C may be operated to advance or delay the video tape transported by the selected VTR. This process is repeated until the editor observes that the desired scene location is played back substantially simultaneously from the VTRs 1, 2 and 3. At that time, the editor operates a synchronizing point setting button S to transfer the time codes read from the VTRs 1, 2 and 3 to the synchronized time code detector 7. These time codes thus comprise the aforementioned synchronized time codes.

Next, to carry out an edit operation now that the VTRs are synchronized, a desired segment on each VTR is identified while the VTRs operate concurrently and in synchronism. For example, a segment on the VTR 1 is identified by operating the VTR selector button L and the jog dial R until the beginning of that segment is reached. At that time, an edit start point button D is operated to transfer the time code on the VTR 1 to the buffer memory 42 and thence to the data store 44 to identify the edit point. The time code corresponding to this edit point is displayed on a time code display H. When the end of this segment is observed, the editor operates edit end point button E; and the time code then read from the VTR 1 is transferred to the buffer memory 42 and then to the data store 44. The edit point identified by this time code is displayed by the time code display H.

A similar operation is carried out to identify the beginning and ending of other desired segments which are reproduced from the VTR 2 or the VTR 3. Preferably, the time codes identifying the start and end edit points on the VTR 2 are displayed by a time code display I, and the time codes identifying the start and end edit points on the VTR 3 are displayed by a time code display J. In the example described above, the time codes reproduced from the VTR 1 at each edit point regardless of whether it is the VTR 1, the VTR 2 or the VTR 3 that is reproducing the video information, are stored in the data store 44 whenever the edit start point button D or the edit end point button E is operated. Alternatively, the data store 44 may supply the time codes actually read from the VTR 2 or the VTR 3 when edit points for those VTRs are selected.

If image processing of a reproduced segment of video information is desired, a switch setting button F may be operated by the editor when the reproduced video signal is displayed on the monitor 5. For example, and as shown in Figure 4, operation of this button closes switch #4 of the video switching matrix 10. In an alternative case, the image processor 8 may be connected to each of the VTRs 1, 2 and 3, and, when a particular VTR is selected, as by operating the selector button L, M or N, the video information reproduced by that VTR may be image processed for recording onto the edit tape by operating the switch setting button F. When that button is operated, the monitor 5 and the recording VTR 4 are disconnected from the output of that play VTR and are connected to the output of the image processor 8.

Once edit information has been selected by the aforedescribed operation, it may be revised, if desired, simply by operating the appropriate VTR selector button L, M or N and then repeating the operation by which the source tape played by the selected VTR is searched for a new segment which then is selected by operating the edit start button D and the edit end button E. To revise the previously stored edit points, a correction button G is operated by the editor. Furthermore, if a segment from the VTR 2 is to be selected in place of a segment from the VTR 1, thus changing the sequence in which the video segments are to be reproduced, a new sequence may be selected by operating the desired VTR selector buttons, the edit start and the edit end buttons D and E, the switch setting button F and the correction button G. Thus, revised edit information is generated and supplied to the data store 44 to replace the previously selected edit data.

The cut-in and cut-out points for each segment to be recorded on the edit tape are selected by operating a recording VTR selector button O and the jog dial R to position the edit tape at locations to which the edited segments are to be transferred. It is appreciated that the editor observes the information previously recorded on the recording VTR 4 via the monitor 5. When a desired cut-in point is reached, the edit start button D is operated. This establishes the point on the edit tape at which the sequence of segments selected by the aforedescribed operation is recorded. In one case, the cut-out point is determined automatically at the end of the sequence of transferred segments. In an alternative case, the cut-out point may be selected simply by operating the edit end button E when a desired point on the edit tape is observed on the monitor 5 by the editor.

To observe the edit operation which has been selected without actually re-recording the selected segments on the edit tape, a preview button U is operated. At that time, the edit information stored in the data store 44 is used to control the VTRs 1, 2 and 3 and the switching matrices 10 and 20 such that the selected segments are displayed on the monitor 5 in the sequence that has been chosen. If the editor wishes to revise any of this edit information, he may do so in the manner which has been discussed above. However, if the editor is satisfied with his selected editing, he need merely operate an edit start button V and the segments which had been selected are reproduced from the VTRs 1, 2 and 3, selectively processed by the image processor 8 and re-recorded on the edit tape in the particular sequence which he determined.

While the invention has been particularly shown and described with reference to preferred embodiments, it will be readily appreciated that various changes and modifications may be made. For example, the source media have been described herein as video tapes. It is appreciated that other suitable source media may be used, such as video discs, or the like. Similarly, although only three play VTRs have been described, any desired number of play VTRs (or other source media) can be used to provide video information for recording on the edit tape. Likewise, although video tape is the preferred media for recording edited information, other media capable of recording may be used, such as a WORM disc, an erasable optical disc, or the like.

## Claims

1. Apparatus for editing video programme information from a plurality of prerecorded source media (1, 2, 3) onto an edit medium (4), wherein each source medium (1, 2, 3) includes video programme information of a common scene which may be recorded on that medium at a location relative to a beginning location thereof that differs from the recording location of that same common scene on another source medium (1, 2, 3) and each source medium (1, 2, 3) includes address data representing discrete positions thereon, said apparatus comprising: playback means (1, 2, 3, 30) for playing back the programme information of said common scene concurrently from the plurality of source media (1, 2, 3); and
monitor means (5) for monitoring the played back programme information; characterized by:
indicating means (5, 50, 7) for indicating when a scene location in the common scene is played back substantially simultaneously from the plurality of source media (1, 2, 3);
storage means (42, 44) for storing as synchronized address data the address data from each source medium representing the actual position at which said scene location is recorded on that source medium; select means (50, 30, 36, 37) for selecting edit points on individual ones of the source media;
reference means (31, 32, 33) for referencing the selected edit points to said synchronized address data; and
control means (30) for controlling the playback means (1, 2, 3, 30) to play back selected segments of video programme information from respective source media (1, 2, 3) for recording onto the edit medium (4) in accordance with the referenced edit points.

2. Apparatus according to claim 1 wherein said select means (50, 30, 36, 37) includes means (36, 37) for reading the address data from a source medium (1, 2, 3) corresponding to a selected edit.

3. Apparatus according to claim 2 wherein said reference means (31, 32, 33) comprises means (31) for determining each difference between the synchronized address data of a predetermined source medium (1, 2, 3) and the synchronized address data of each of the remaining source media (1, 2, 3), means (42) for sensing the address data from said predetermined source medium (1, 2, 3) at each edit point on each source medium (1, 2, 3), and combining means (32) for combining each difference with the sensed address data to produce source media controlling address data for controlling the positioning of said source media (1, 2, 3) to reach the selected edit points thereon in synchronism with each other.

4. Apparatus according to claim 1 wherein said control means (30) comprises switch means (10, 20) for supplying to the edit medium (4) the programme video information played back from individual ones of different source media (1, 2, 3) when the respective referenced edit points are reached to record each selected segment.

5. Apparatus according to claim 4 wherein said storage means (42, 44) stores the referenced edit point for each source medium (1, 2, 3) and also stores sequence data representing the sequence in which the programme video information played back from the individual source media (1, 2, 3) are supplied to the edit medium, and wherein said switch means (10, 20) connects the individual source media (1, 2, 3) to said edit medium (4) in the sequence represented by the stored sequence data at the times that the stored referenced edit points are reached.

6. Apparatus according to claim 1 wherein the prerecorded video programme information includes video and audio signals; and wherein said indicating means (5, 50, 7) comprises manually operable means (S) to be actuated when an operator observes when video pictures played back from the individual source media (1, 2, 3) represent approximately the same location in the scene and when the audio signals played back from the individual source media (1, 2, 3) represent substantially the same location in the scene, thereby to generate a synchronizing signal at the time the individual source media (1, 2, 3) reach substantially the same location in the scene simultaneously.

7. Apparatus according to claim 1 wherein each source medium (1, 2, 3) has prerecorded thereon video programme information of a plurality of scenes; and wherein said storage means (42, 44) stores a plurality of scene tables, each table including the referenced edit points identifying the respective segments of video programme information to be played back from the individual source media (1, 2, 3) and recorded onto the edit medium (4), sequence data identifying the order in which said segments are to be played back, and scene identifying data representing the scene containing said segments.

8. Apparatus according to claim 7 wherein the control means (30) includes read out means (43) for reading a selected scene table from said storage means (42, 44) to control the playing of the segments of video programme information identified by the referenced edit points in said selected scene table in the order identified by the sequence data in said selected scene table.

9. Apparatus according to claim 7 further comprising means for selectively changing the referenced edit points and the sequence data stored in a selected scene table only.

10. Apparatus according to claim 1 wherein said control means (30) includes image processing means (8) for processing the video signal played back from at least one of said source media (1, 2, 3) to impart special video effects thereto prior to the recording thereof onto the edit medium (4).

11. Apparatus according to claim 10 wherein the segments of video programme information are recorded at clock times and said image processing means (8) exhibits an inherent time delay; and said control means (30) further includes means for identifying a record edit point on said edit medium (4) at which the processed signal is to be recorded, time establishing means (11, 15) for establishing the clock time at which said record edit point on said edit medium and the referenced edit point at which said selected segment of video programme information is played back from a source medium (1, 2, 3) and processed by said image processing means (8) both occur, and modifying means (17, 18) for modifying the occurrence of one of said record edit point and said referenced edit point relative to said established clock time to compensate for said inherent time delay such that the processed video signal is recorded at said record edit point.

12. Apparatus according to claim 11 wherein said control means (30) includes play storage means (15, 12) for storing a playback table including the referenced edit points identifying the respective segments of video programme information to be played back from a source medium (1, 2, 3) and image processed for recording and for storing clock data identifying clock times which correspond to each referenced edit point, and record storage means (15, 13) for storing a record table including the record edit points identifying those points on said edit medium (4) at which each image processed segment of video programme information is to be recorded and for storing clock data identifying clock times which correspond to each record edit point; and wherein said modifying means (17, 18) comprises means for reading the stored playback table and the stored record table, clock generator means (11) for generating clock time signals while playing back video programme information from said source media (1, 2, 3) and recording segments on said edit medium (4) such that each referenced edit point and each record edit point is reached when said clock generator means (11) generates clock time signals corresponding thereto, and adjustment means (18) for adjusting the clock data stored in one of said playback or record tables by an amount substantially equal to said inherent time delay.

13. Apparatus according to claim 12 wherein said adjustment means (18) comprises subtracting means (18) for subtracting an amount substantially equal to said inherent times delay from the clock data corresponding to the referenced edit point at which the segment of video programme information to be processed is played back from a source medium (1, 2, 3) thereby to produce modified clock data; and wherein said control means (30) includes means for comparing the generated time clock signals with the modified clock data to determine when the segment of video programme information to be processed is in position to be played back.

## Patentansprüche

1. Vorrichtung zum Editieren einer Videoprogramminformation von mehreren bespielten Ursprungsmedien (1, 2, 3) auf ein Editiermedium (4), wobei jedes Ursprungsmedium (1, 2, 3) eine Videoprogramminformation einer gemeinsamen Szene enthält, die auf diesem Medium an einer Stelle, relativ zu ihrer Anfangsstelle aufgezeichnet sein kann, die sich von der Aufzeichnungsstelle dieser gleichen gemeinsamen Szene auf einem anderen Ursprungsmedium unterscheidet, und jedes Ursprungsmedium (1, 2, 3) Adreßdaten aufweist, die einzelne Positionen darauf darstellen, wobei die Vorrichtung umfaßt:
eine Wiedergabeeinrichtung (1, 2, 30) zur Wiedergabe der Programminformation der gemeinsamen Szene gleichzeitig aus diesen Ursprungsmedien (1, 2, 3); und
eine Überwachungseinrichtung (5) zum Überwachen der wiedergegebenen Programminformation;
gekennzeichnet durch:
eine Anzeigeeinrichtung (5, 50, 7) zum Anzeigen, wenn eine Stelle einer Szene in der gemeinsamen Szene im wesentlichen simultan aus diesen Ursprungsmedien (1, 2, 3) wiedergegeben wird;
eine Speichereinrichtung (42, 44) zum Speichern der Adreßdaten aus jedem Ursprungsmedium als synchronisierte Adreßdaten, wobei die Adreßdaten die augenblickliche Position darstellen, bei der die Stelle der Szene auf diesem Ursprungsmedium aufgezeichnet ist;
eine Auswahleinrichtung (50, 30, 36, 37) zur Auswahl von Editierstellen auf bestimmten Medien der Ursprungsmedien; eine Referenzeinrichtung (31, 32, 33), um die ausgewählten Editierstellen gegenüber den synchronisierten Adreßdaten in Beziehung zu setzen; und
eine Steuereinrichtung (30) zum Steuern der Wiedergabeeinrichtung (1, 2, 3, 30), um ausgewählte Segmente der Videoprogramminformation aus entsprechenden Ursprungsmedien (1, 2, 3) zum Aufzeichnen auf dem Editiermedium (4) gemäß den bezogenen Editierstellen wiederzugeben.

2. Vorrichtung nach Anspruch 1, wobei die Auswahleinrichtung (50, 30, 36, 37) eine Einrichtung (36, 37) zum Lesen der Adreßdaten aus einem Ursprungsmedium (1, 2, 3) entsprechend einem ausgewählten Editiervorgang aufweist.

3. Vorrichtung nach Anspruch 2, wobei die Referenzeinrichtung (31, 32, 33) eine Einrichtung (31) zum Bestimmen jeder Differenz zwischen den synchronisierten Adreßdaten eines vorgegebenen Ursprungsmediums (1, 2, 3) und den synchronisierten Adreßdaten von jedem der übrigen Ursprungsmedien (1, 2, 3), eine Einrichtung (42) zum Ermitteln der Adreßdaten aus dem vorgegebenen Ursprungsmedium (1, 2, 3) bei jeder Editierstelle auf jedem Ursprungsmedium (1, 2, 3), und eine Kombiniereinrichtung (32) zum Kombinieren jeder Differenz mit den ermittelten Adreßdaten aufweist, um Ursprungsmedien-Steueradreßdaten zum Steuern der Position der Ursprungsmedien (1, 2, 3) zu erzeugen, um die ausgewählten Editierstellen darauf synchron zueinander zu erreichen.

4. Vorrichtung nach Anspruch 1, wobei die Steuereinrichtung (30) eine Schalteinrichtung (10, 20) zum Liefern der von den bestimmten Medien der verschiedenen Ursprungsmedien (1, 2, 3) wiedergegebenen Videoprogramminformation zum Editiermedium (4) aufweist, wenn die entsprechenden bezogenen Editierstellen erreicht sind, um jedes ausgewählte Segment aufzuzeichnen.

5. Vorrichtung nach Anspruch 4, wobei die Speichereinrichtung (42, 44) die in Bezug genommene Editierstelle für jedes Ursprungsmedium (1, 2, 3) speichert und ebenfalls die Folgedaten speichert, die die Reihenfolge darstellen, mit der die Videoprogramminformation, die aus den individuellen Ursprungsmedien (1, 2, 3) wiedergegeben wird, zum Editiermedium geliefert wird, und wobei die Schalteinrichtung (10, 20) die bestimmten Ursprungsmedien (1, 2, 3) mit dem Editiermedium (4) in der Reihenfolge verbindet, die durch die gespeicherten Folgedaten dargestellt wird, zu den Zeitpunkten, wo die gespeicherten bezogenen Editierstellen erreicht sind.

6. Vorrichtung nach Anspruch 1, wobei die vorher aufgezeichnete Videoprogramminformation Video- und Audiosignale enthält; und wobei die Anzeigeeinrichtung (5, 50, 7) eine manuell betätigbare Einrichtung (S) aufweist, die betätigt werden muß, wenn eine Bedienungsposition beobachtet, wenn Videobilder, die aus den bestimmten Ursprungsmedien (1, 2, 3) wiedergegeben werden, ungefähr die gleiche Stelle in der Szene darstellen, und wenn die Audiosignale, die aus den bestimmten Ursprungsmedien (1, 2, 3) wiedergegeben werden, im wesentlichen die gleiche Stelle in der Szene darstellen, um dadurch ein Synchronisationssignal in dem Zeitpunkt zu erzeugen, wo die bestimmten Ursprungsmedien (1, 2, 3) im wesentlichen die gleiche Stelle in der Szene simultan erreichen.

7. Vorrichtung nach Anspruch 1, wobei auf jedem Ursprungsmedium (1, 2, 3) eine Videoprogramminformation von mehreren Szenen vorher aufgezeichnet ist; und wobei die Speichereinrichtung (42, 44) mehrere Szenentabellen speichert, wobei jede Tabelle die bezogenen Editierstellen enthält, die die entsprechenden Segmente der Videoprogramminformation erkennen, die aus den bestimmten Ursprungsmedien (1, 2, 3) wiederzugeben und auf das Editiermedium (4) aufzuzeichnen sind, Folgedaten, die die Reihenfolge erkennen, in der die Segmente wiederzugeben sind, und Szenenerkennungsdaten, die die Szene darstellen, welche diese Segmente enthält.

8. Vorrichtung nach Anspruch 7, wobei die Steuereinrichtung (30) eine Leseeinrichtung (43) zum Lesen einer ausgewählten Szenentabelle aus der Speichereinrichtung (42, 44) enthält, um die Wiedergabe der Segmente der Videoprogramminformation zu steuern, die durch die bezogenen Editierstellen in der ausgewählten Szenentabelle in der Ordnung erkannt werden, die durch die Folgedaten in der ausgewählten Szenentabelle erkannt werden.

9. Vorrichtung nach Anspruch 7, die weiter eine Einrichtung zur wahlweisen Änderung der in Bezug genommenen Editierstel-len und der Folgedaten aufweist, die nur in einer ausgewählten Szenentabelle gespeichert sind.

10. Vorrichtung nach Anspruch 1, wobei die Steuereinrichtung (30) eine Bildverarbeitungseinrichtung (8) zum Verarbeiten des Videosignals aufweist, das von zumindest einem der Ursprungsmedien (1, 2, 3) wiedergegeben wird, um Spezialvideoeffekte vor dessen Aufzeichnung auf das Editiermedium dahin zu übertragen (4).

11. Vorrichtung nach Anspruch 10, wobei die Segmente der Videoprogramminformation mit Taktzeiten aufgezeichnet sind und wobei die Bildverarbeitungseinrichtung (8) eine ihr anhaftende Zeitverzögerung aufweist; und wobei die Steuereinrichtung (30) weiter eine Einrichtung zur Erkennung einer Aufzeichnungseditierstelle auf dem Editiermedium (4) aufweist, bei dem das verarbeitete Signal aufgezeichnet werden soll, eine Zeiteinrichtungsvorrichtung (11, 15) zur Einrichtung der Taktzeit, mit der die Aufzeichnungseditierstelle auf dem Aufzeichnungsmedium und die in Bezug genommene Editierstelle, bei dem das ausgewählte Segment der Videoprogramminformation aus dem Ursprungsmedium (1, 2, 3) wiedergegeben wird und durch die Bildverarbeitungseinrichtung (8) verarbeitet wird, beide auftreten, und eine Modifikationseinrichtung (17, 18) zur Modifizierung des Auftretens der Aufzeichnungseditierstelle oder der in Bezug genommenen Editierstelle hinsichtlich der eingerichteten Taktzeit, um die ihr anhaftende Zeitverzögerung zu kompensieren, so daß das verarbeitete Videosignal an der Aufzeichnungseditierstelle aufgezeichnet wird.

12. Vorrichtung nach Anspruch 11, wobei die Steuereinrichtung (30) eine Wiedergabespeichereinrichtung (15, 12) zum Speichern einer Wiedergabetabelle aufweist, die die in Bezug genommenen Editierstellen aufweist, die die entsprechenden Segmente einer Videoprogramminformation erkennen, die aus dem Ursprungsmedium (1, 2, 3) wiederzugeben ist und die bildverarbeitet ist zur Aufzeichnung und zum Speichern von Taktdaten, die Taktzeiten erkennen, die jeder in Bezug genommenen Editierstelle entsprechen, und eine Aufzeichnungsspeichereinrichtung (15, 13) zum Speichern einer Aufzeichnungstabelle, die die Aufzeichnungsmontagepunkte enthält, die diese Punkte auf dem Editiermedium (4) erkennen, bei denen jedes bildverarbeitete Segment der Videoprogramminformation aufgezeichnet werden soll, und zum Speichern von Taktdaten, die die Taktzeiten erkennen, die jedem Aufzeichnungsmontagepunkt entsprechen; und wobei die Modifikationseinrichtung (17, 18) eine Einrichtung zum Lesen der gespeicherten Wiedergabetabelle und der gespeicherten Aufzeichnungstabelle aufweist, eine Taktgeneratoreinrichtung (11) zum Erzeugen von Taktzeitsignalen, während die Videoprogramminformation aus den Ursprungsmedien (1, 2, 3) wiedergegeben wird und Segmente auf dem Editiermedium (4) aufgezeichnet werden, so daß jeder bezogene Montagepunkt und jeder Aufzeichnungsmontagepunkt erreicht wird, wenn die Taktgeneratoreinrichtung (11) Taktzeitsignale entsprechend dazu erzeugt, und eine Einstelleinrichtung (18) zum Einstellen der Taktdaten, die in einer der Wiedergabe- oder Aufzeichnungstabellen gespeichert sind, um einen Betrag, der im wesentlichen gleich der ihr anhaftenden Zeitverzögerung ist.

13. Vorrichtung nach Anspruch 12, wobei die Einstelleinrichtung (18) eine Subtrahiereinrichtung (18) zum Subtrahieren eines Betrags aufweist, der im wesentlichen gleich der inhärenten Zeitverzögerung von den Taktdaten ist, die der in Bezug genommenen Editierstelle entsprechen, bei dem das Segment der Videoprogramminformation, das verarbeitet werden soll, aus einem Ursprungsmedium (1, 2, 3) wiedergegeben wird, um dadurch modifizierte Taktdaten zu erzeugen; und wobei die Steuereinrichtung (30) eine Einrichtung zum Vergleichen der erzeugten Zeittaktsignale mit den modifizierten Taktdaten aufweist, um zu ermitteln, wann das Segment einer Videoprogramminformation, das verarbeitet werden soll, lagerichtig ist, um wiedergegeben zu werden.

## Revendications

1. Appareil pour monter des informations de programme vidéo à partir d'une pluralité de supports de source préenregistrés (1, 2, 3) sur un support de montage (4), dans lequel chaque support de source (1, 2, 3) comprend des informations de programme vidéo d'une scène commune qui peuvent être enregistrées sur ce support à une position par rapport à une position de début de celui-ci qui diffère de la position d'enregistrement de cette même scène commune sur un autre support de source (1, 2, 3) et chaque support de source (1, 2, 3) comprend des données d'adresse représentant des positions discrètes sur celui-ci, ledit appareil comprenant :
un dispositif de relecture (1, 2, 3, 30) pour relire concurremment les informations de programme de ladite scène commune à partir de la pluralité de supports de source (1, 2, 3) ; et
un dispositif de moniteur (5) pour montrer les informations de programme relues ;
caractérisé par :
un dispositif d'indication (5, 50, 7) pour indiquer lorsqu'une position de scène dans la scène commune est relue sensiblement simultanément à partir de la pluralité de supports de source (1, 2, 3) ;
un dispositif de stockage (42, 44) pour stocker comme données d'adresse synchronisées les données d'adresse à partir de chaque support de source représentant la position réelle à laquelle ladite position de scène est enregistrée sur ce support de source ;
un dispositif de sélection (50, 30, 36, 37) pour sélectionner des points de montage sur un des supports de source individuel ;
un dispositif de référence (31, 32, 33) pour référencer les points de montage sélectionnés auxdites données d'adresse synchronisées ; et
un dispositif de commande (30) pour commander le dispositif de relecture (1, 2, 3, 30) pour relire des segments sélectionnés d'informations de programme vidéo à partir de supports de source respectifs (1, 2, 3) pour l'enregistrement sur le support de montage (4) en fonction des points de montage référencés.

2. Appareil selon la revendication 1 dans lequel ledit dispositif de sélection (50, 30, 36, 37) comprend un dispositif (36, 37) pour lire les données d'adresse à partir d'un support de source (1, 2, 3) correspondant à un montage sélectionné.

3. Appareil selon la revendication 2 dans lequel ledit dispositif de référence (31, 32, 33) comprend un dispositif (31) pour déterminer chaque différence entre les données d'adresse synchronisées d'un support de source prédéterminé (1, 2, 3) et les données d'adresse synchronisées de chacun des supports de source restants (1, 2, 3), un dispositif (42) pour détecter les données d'adresse à partir dudit support de source prédéterminé (1, 2, 3) à chaque point de montage sur chaque support de source (1, 2, 3), et un dispositif de combinaison (32) pour combiner chaque différence avec les données d'adresse détectées pour produire des données d'adresse de contrôle de supports de source pour commander la position desdits supports de source (1, 2, 3) pour atteindre les points de montage sélectionnés sur ceux-ci en synchronisme l'un avec l'autre.

4. Appareil selon la revendication 1 dans lequel ledit dispositif de commande (30) comprend un dispositif de commutation (10, 20) pour fournir le support de montage (4) les informations vidéo de programme relues à partir d'un des différents supports de source individuel (1, 2, 3) lorsque les points de montage référencés respectifs sont atteints pour enregistrer chaque segment sélectionné.

5. Appareil selon la revendication 4, dans lequel ledit dispositif de stockage (42, 44) stocke le point de montage référencé pour chaque support de source (1, 2, 3) et aussi stocke des données de séquence représentant la séquence dans laquelle les informations de programme vidéo relues à partir des supports de source individuels (1, 2, 3) sont appliquées au support de montage, et dans lequel ledit dispositif de commutation (10, 20) relie les supports de source individuels (1, 2, 3) audit support de montage (4) dans la séquence représentée par les données de séquence stockées aux moments où les points de montage référencés stockés sont atteints.

6. Appareil selon la revendication 1 dans lequel les informations de programme vidéo préenregistrées comprennent des signaux vidéo et audio ; et dans lequel ledit dispositif d'indication (5, 50, 7) comprend un dispositif utilisable manuellement (S) pour être actionné lorsqu'un opérateur observe lorsque des images vidéo relues à partir des supports de source individuels (1, 2, 3) représentent approximativement la même position dans la scène et lorsque les signaux audio relus à partir des supports de source individuels (1, 2, 3) représentent sensiblement la même position dans la scène, pour générer ainsi un signal de synchronisation au moment où les supports de source individuels (1, 2, 3) atteignent simultanément sensiblement la même position dans la scène.

7. Appareil selon la revendication 1 dans lequel chaque support de source (1, 2, 3) a des informations de programme vidéo préenregistrées sur celui-ci d'une pluralité de scènes ; et dans lequel ledit dispositif de stockage (42, 44) stocke une pluralité de tables de scène, chaque table comprenant les points de montage référencés identifiant les segments respectifs d'informations de programme vidéo à relire à partir des supports de source individuels (1, 2, 3) et enregistrés sur le support de montage (4), des données de séquence identifiant l'ordre dans lequel lesdits segments doivent être relus et, des données d'identification de scène représentant la scène contenant lesdits segments.

8. Appareil selon la revendication 7 dans lequel ledit dispositif de commande (30) comprend un dispositif d'extraction (43) pour lire une table de scène sélectionnée à partir dudit dispositif de stockage (42, 44) pour commander la lecture des segments d'informations de programme vidéo identifiés par les points de montage référencés dans ladite table de scène sélectionnée dans l'ordre identifié par les données de séquence dans ladite table de scène sélectionnée.

9. Appareil selon la revendication 7 comprenant en outre un dispositif pour changer sélectivement les points de montage référencés et les données de séquence stockées seulement dans une table de scène sélectionnée.

10. Appareil selon la revendication 1 dans lequel ledit dispositif de commande (30) comprend un dispositif de traitement d'image (8) pour traiter le signal vidéo relu à partir au moins d'un desdits supports de source (1, 2, 3) pour communiquer des effets vidéo spéciaux à celui-ci avant l'enregistrement de ceux-ci sur le support de montage (4).

11. Appareil selon la revendication 10 dans lequel les segments d'informations de programme vidéo sont enregistrés à des temps d'horloge et ledit dispositif de traitement d'image (8) montre un retard inhérent ; et ledit dispositif de commande (30) comprend en outre un dispositif pour identifier un point de montage d'enregistrement sur ledit support de montage (4) auquel le signal traité doit être enregistré, un dispositif d'établissement de temps (11, 15) pour établir le temps d'horloge auquel ledit point de montage d'enregistrement sur ledit support de montage et le point de montage référencé auquel ledit segment sélectionné d'informations de programme vidéo est relu à partir d'un support de source (1, 2, 3) et traité par ledit dispositif de traitement d'image (8) à la fois se produisent, et un dispositif de modification (17, 18) pour modifier l'occurrence d'un dudit point de montage d'enregistrement et dudit point de montage référencé par rapport audit temps d'horloge établi pour compenser ledit retard inhérent de sorte que le signal vidéo traité est enregistré sur ledit point de montage d'enregistrement.

12. Appareil d'enregistrement selon la revendication 11 dans lequel ledit dispositif de commande (30) comprend un dispositif de stockage de lecture (15, 12) pour stocker une table de relecture comprenant les points de montage référencés identifiant les segments respectifs d'informations de programme vidéo à relire à partir d'un support de source (1, 2, 3) et traités en image pour enregistrer et pour stocker des données d'horloge identifiant des temps d'horloge qui correspondent à chaque point de montage référencé, et un dispositif de stockage d'enregistrement (15, 13) pour stocker une table d'enregistrement comprenant les points de montage d'enregistrement identifiant ces points sur ledit support de montage (4) auquel chaque segment traité en image d'informations de programme vidéo doit être enregistré et pour stocker des données d'horloge identifiant des temps d'horloge qui correspondent à chaque point de montage d'enregistrement ; et dans lequel ledit dispositif de modification (17, 18) comprend un dispositif pour lire la table de relecture stockée et la table d'enregistrement stockée, un dispositif générateur d'horloge (11) pour générer des signaux de temps d'horloge tout en relisant des informations de programme vidéo à partir desdits supports de source (1, 2, 3) et en enregistrant des segments sur ledit support de montage (4) de sorte que chaque point de montage référencé et chaque point de montage d'enregistrement est atteint lorsque ledit dispositif générateur d'horloge (11) génère des signaux de temps d'horloge correspondant à ceux-ci, et un dispositif d'ajustement (18) pour ajuster les données d'horloge stockées dans une desdites tables de relecture ou d'enregistrement par une valeur sensiblement égale audit retard inhérent.

13. Appareil selon la revendication 12 dans lequel ledit dispositif d'ajustement (18) comprend un dispositif de sélection (18) pour soustraire une valeur sensiblement égale audit retard inhérent des données d'horloge correspondant au point de montage référencé auquel le segment d'informations de programme vidéo à traiter est relu à partir d'un support de source (1, 2, 3) pour produire ainsi des données d'horloge modifiées ; et dans lequel ledit dispositif de commande (30) comprend un dispositif pour comparer les signaux d'horloge de temps générés avec les données d'horloge modifiées pour déterminer lorsque le segment d'informations de programme vidéo à traiter est dans une position pour être relu.
